(19) Europäisches Patentamt
European Patent Office
Office européen des brevets

(11) **EP 3 283 786 B1**

(12) **EUROPÄISCHE PATENTSCHRIFT**

(45) Veröffentlichungstag und Bekanntmachung des Hinweises auf die Patenterteilung:
**07.11.2018 Patentblatt 2018/45**

(21) Anmeldenummer: **16720994.9**

(22) Anmeldetag: **14.04.2016**

(51) Int Cl.:
*G01L 5/26* (2006.01)     *G01M 13/02* (2006.01)
*G01L 5/00* (2006.01)     *G01L 3/10* (2006.01)
*F16F 15/10* (2006.01)     *F16F 15/02* (2006.01)

(86) Internationale Anmeldenummer:
**PCT/AT2016/050097**

(87) Internationale Veröffentlichungsnummer:
**WO 2016/164952 (20.10.2016 Gazette 2016/42)**

(54) **VORRICHTUNG UND VERFAHREN ZUR ÜBERWACHUNG EINER WELLENVERBINDUNG MIT EINEM DÄMPFUNGSELEMENT**

DEVICE AND METHOD FOR MONITORING A SHAFT CONNECTION WITH A DAMPING ELEMENT

DISPOSITIF ET METHODE POUR CONTROLLER LA CONNECTION D'UN ARBRE AVEC UN ELEMENT AMORTISSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.04.2015 AT 502932015**

(43) Veröffentlichungstag der Anmeldung:
**21.02.2018 Patentblatt 2018/08**

(73) Patentinhaber: **Kristl, Seibt & Co. Gesellschaft m.b.H.**
**8052 Graz (AT)**

(72) Erfinder:
• **BAUER, Robert**
**8041 Graz (AT)**
• **BAUMGARTNER, Karl**
**8043 Graz (AT)**
• **HÖHS, Hans-Jörg**
**8111 Judendorf-Strassengel (AT)**

(74) Vertreter: **Sonn & Partner Patentanwälte**
**Riemergasse 14**
**1010 Wien (AT)**

(56) Entgegenhaltungen:
**EP-A1- 2 820 392     EP-A2- 0 478 529**
**US-A- 4 592 241**

## Beschreibung

Die Erfindung betrifft eine Vorrichtung und ein Verfahren zur Überwachung einer Wellenverbindung mit einem Dämpfungselement zur Dämpfung von torsionalen Schwingungen der Wellenverbindung, wobei ein über die Wellenverbindung übertragenes Wellendrehmoment mit einer Messeinrichtung ermittelt wird.

Wellenverbindungen enthalten manchmal zur Dämpfung von torsionalen Schwingungen Dämpfungselemente, welche elastisch sind und beispielsweise aus Gummi oder einem gummiähnlichen Material hergestellt sind. Diese Dämpfungselemente setzen die Schwingungsleistung von unerwünschten torsionalen Schwingungen der Wellenverbindung in Wärme um und entziehen sie so dem System. Derartige elastische Wellen mit Dämpfung werden beispielsweise bei Prüfständen für Verbrennungsmotoren oder in Antriebssträngen von Fahrzeugen oder Schiffen eingesetzt. Sie werden dabei jeweils so ausgelegt, dass im Normalbetrieb die in Wärme umgesetzte Leistung problemlos abgeführt werden kann und sich die thermische Belastung des Dämpfungselements daher in verträglichen Grenzen bewegt. Im Fehlerfall des Systems bzw. eines der verbundenen Elemente können aber vermehrt Drehunförmigkeiten auftreten, die das Dämpfungselement stark aufheizen und so sehr schnell zur Zerstörung der Wellenverbindung führen können. Es ist daher zweckmäßig, einen derartigen Fehlerfall rasch und zuverlässig zu erkennen, um eine Zerstörung oder Beschädigung der Wellenverbindung z.B. durch Anhalten des Systems, verhindern zu können.

Eine bekannte Methode zur Wellenüberwachung ist die Messung der Temperatur des Dämpfungselements. Eine Messung mit einem Temperaturfühler (etwa einem Widerstandsthermometer oder einem Thermoelement) ist aber aufgrund der sich drehenden Welle schwierig. Eine kontaktlose Temperaturmessung ist relativ teuer und hat auch den Nachteil, dass nur die Oberflächentemperatur des Dämpfungselements gemessen werden kann, im Fehlerfall kann daher der Temperaturanstieg unter Umständen nicht rasch genug erkannt werden, sodass eine Zerstörung oder Beschädigung der Wellenverbindung nicht mehr verhindert werden kann.

Eine Überwachung eines Torsionsdämpfers in Form eines so genannten Visco-Dämpfers ist in EP 2 143 973 A1 gezeigt. Dessen dämpfende Wirkung beruht auf einem anderen Funktionsprinzip als z.B. bei einer Welle mit Gummielement: anstelle der Differenzwinkelgeschwindigkeit zwischen den Wellenenden ist bei dem Visco-Dämpfer die Drehunförmigkeit des Dämpfer-Gehäuses für die Dämpfungsarbeit ausschlaggebend. In Zusammenhang mit einem solchen Visco-Dämpfer beschreibt die EP 2 143 973 A1 ein Verfahren und System zur Überwachung des Dämpfers. Dabei wird ein Drehmoment der Wellenverbindung und die Temperatur des Dämpfungselements (d.h. des viskosen Fluids) gemessen. Zur Erkennung einer thermischen Überlastung wird ausschließlich das Temperatursignal des Temperatursensors verwendet, wobei die oben beschriebenen Nachteile einer Temperaturmessung bei einem Visco-Dämpfer mit der Möglichkeit von Konvektion im Dämpfungselement und einer daher naturgemäß eher gleich verteilten Temperatur vergleichsweise weniger ausgeprägt sind.

Die US 4,592,241 A zeigt eine Messeinrichtung zur Messung eines Drehmoments. Die Messung basiert auf der Ermittlung eines Phasenversatzes zwischen zwei durch elastische Elemente aus Stahl oder einer Metalllegierung verbundenen Schwungrädern. Zum Schutz der elastischen Elemente vor einer mechanischen Überlastung kann eine mechanische Fangvorrichtung vorgesehen sein, welche die Phasenauslenkung zwischen den Schwungrädern begrenzt.

Die EP 0 478 529 A2 zeigt einen Drehschwingungsdämpfer mit relativ zueinander verdrehbaren Innen- und Außenteilen, welche durch Federelemente verbunden sind. Mittels Messwertgebern kann die momentane relative Verdrehung der Innen- und Außenteile gemessen und überwacht werden.

Die EP 2 820 392 A1 offenbart ein spezielles Regelungsverfahren zur Dämpfung von Schwingungen.

Die EP 1 333 268 A2 betrifft ein Verfahren zur aktiven Dämpfung von Schwingungen an einem Fahrzeug-Antriebsstrang-Prüfstand.

Es ist Aufgabe der Erfindung, eine Überlastung des Dämpfungselements im Fehlerfall einfach und rascher als mit den bekannten Verfahren zu erkennen.

Diese Aufgabe wird mit einer Vorrichtung der eingangs angeführten Art erfindungsgemäß dadurch gelöst, dass mit der Messeinrichtung eine Auswerteeinrichtung verbunden ist, welche eingerichtet ist, eine zeitliche Ableitung eines von der Messeinrichtung ermittelten Wellendrehmoments zu berechnen und auf Basis der berechneten zeitlichen Ableitung eine Überlastung des Dämpfungselements zu erkennen. Die Erfindung beruht auf der Erkenntnis, dass die im Dämpfungselement umgesetzte Leistung aus der zeitlichen Änderung des Wellendrehmoments (d.h. insbesondere aus der zeitlichen Ableitung des Wellendrehmoments) an der Wellenverbindung abgeleitet werden kann, wie weiter unten in der Figurenbeschreibung im Einzelnen erläutert wird. Auf diese Weise kann die der Schwingung entzogene Arbeit direkt abgeschätzt werden und muss nicht erst aus den - im Allgemeinen verzögerten - Auswirkungen (d.h. das Erwärmen des Materials) am Dämpfungselement ermittelt werden. Ein weiterer Vorteil bei der Verwendung des Wellendrehmoments liegt darin, dass diese Größe z.B. bei einem Motorprüfstand üblicherweise ohnehin mit einem Drehmoment-Messflansch gemessen wird.

Dementsprechend und mit vergleichbaren Vorteilen wird die obige Aufgabe auch bei einem Verfahren der eingangs angeführten Art erfindungsgemäß dadurch gelöst, dass eine zeitliche Ableitung des ermittelten Wellendrehmoments berechnet und auf Basis der berechneten zeitlichen Ableitung eine Überlastung des Dämpfungselements erkannt wird.

Die im Dämpfungselement umgesetzte Verlustleistung resultiert naturgemäß aus der eigentlichen Funktion des Dämpfungselements, der Dämpfung von Schwingungen. Voraussetzung für eine zuverlässige Erkennung von Überlastungen ist eine verlässliche Abschätzung der umgesetzten Verlustleistung, d.h. der der Schwingung entzogenen Arbeit. Es ist günstig, wenn bei der Abschätzung zumindest eine hinsichtlich der deponierten Verlustleistung dominierende Komponente der Schwingungen auf Basis einer Messung zumindest dieser Komponente berücksichtigt werden kann. Eine Obergrenze eines Frequenzbereichs von Schwingungsfrequenzen gemessener Schwingungen, die in die Abschätzung einfließenden können (d.h. deren Schwingungsamplituden bei der Abschätzung berücksichtigt werden können), ist durch die Messeinrichtung zur Ermittlung des über die Wellenverbindung übertragenen Wellendrehmoments und deren Messrate für das Wellendrehmoment vorgegeben. Die Messrate der Messeinrichtung ist vorzugsweise mindestens so hoch, dass zeitliche Änderungen des Wellendrehmoments in einem Frequenzbereich erfasst werden können, der zumindest die erste Resonanzfrequenz der Wellenverbindung umfasst. Die Messrate wird vorzugsweise deutlich mehr als doppelt so groß wie die erwartete erste Resonanzfrequenz sein. Mit einer Messrate von zumindest 100 Hz können erfahrungsgemäß die Anforderungen der meisten praktischen Anwendungsfälle erfüllt werden. Geeignete Messraten können z.B. mit einem Drehmoment-Messflansch erreicht werden (beispielsweise in der Art des von der Hottinger Baldwin Messtechnik GmbH, Deutschland, angebotenen "Drehmoment-Messflansch T10F").

Insbesondere kann die Auswerteeinrichtung eingerichtet sein, eine Überlastung des Dämpfungselements anhand eines der im Dämpfungselement umgesetzten Verlustleistung proportionalen Schätzwerts zu erkennen, wobei der Schätzwert dem Quadrat der zeitlichen Ableitung des ermittelten Wellendrehmoments entspricht. Die Verwendung eines solchen Schätzwerts hat den Vorteil, dass er die Verlustleistung anschaulich wiedergibt und zumindest einen relativen Vergleich der umgesetzten Verlustleistung in verschiedenen Situationen ermöglicht, was beispielsweise bei der Dimensionierung oder Auswahl des Dämpfungselements berücksichtigt werden kann.

Dementsprechend kann bei dem vorliegenden Verfahren aus der zeitlichen Ableitung des ermittelten Wellendrehmoments durch Quadrierung ein der im Dämpfungselement umgesetzten Verlustleistung proportionaler Schätzwert berechnet werden und eine Überlastung des Dämpfungselements anhand des so berechneten Schätzwerts erkannt werden.

Eine einfache und zuverlässige Möglichkeit zur Erkennung einer Überlastung besteht darin, dass die Auswerteeinrichtung eingerichtet ist, eine Überlastung zu erkennen, wenn der Schätzwert einen festgelegten Grenzwert überschreitet. Vorzugsweise wird der Grenzwert weit unterhalb der maximalen Belastbarkeit des Dämpfungselements gewählt werden, um nicht nur eine Zerstörung, sondern auch jegliche Beschädigung der Wellenverbindung weitestgehend zu vermeiden.

Dementsprechend und mit vergleichbaren Vorteilen kann bei dem vorliegenden Verfahren eine Überlastung erkannt werden, wenn der Schätzwert einen festgelegten Grenzwert überschreitet, wobei auch hierbei der Grenzwert vorzugsweise weit unterhalb der maximalen Belastbarkeit des Dämpfungselements gewählt werden kann, um nicht nur eine Zerstörung, sondern auch jegliche Beschädigung der Wellenverbindung weitestgehend zu vermeiden.

Alternativ zu einem festgelegten Grenzwert für den Schätzwert kann auch das Integral des Schätzwerts über eine festgelegte Zeitspanne überwacht werden, wobei eine Überlastung erkannt wird, wenn das Integral einen ihm zugeordneten festgelegten Grenzwert überschreitet. Die festgelegte Zeitspanne kann vorzugsweise von der Abgabegeschwindigkeit der deponierten Energie, d.h. z.B. der Wärmeleitung bzw. Kühlleistung, des Dämpfungselements abhängig gemacht werden. Das Integral ist dann ungefähr proportional der zu einem Zeitpunkt im Dämpfungselement gespeicherten Energie, d.h. im Wesentlichen der Temperatur des Dämpfungselements.

Weiters hat es sich als vorteilhaft herausgestellt, wenn die Auswerteeinrichtung einen nachgeordneten Tiefpassfilter umfasst, welcher eingerichtet ist, den Schätzwert zu filtern, wobei die Grenzfrequenz des nachgeordneten Tiefpassfilters unterhalb der ersten Resonanzfrequenz der Wellenverbindung liegt, und wobei die Auswerteeinrichtung eingerichtet ist, eine Überlastung anhand des gefilterten Schätzwerts zu erkennen. Der Vorteil eines derartigen nachgeordneten Tiefpassfilters besteht darin, dass kurzzeitige Schwankungen des Schätzwerts gefiltert werden, sodass eine zuverlässigere Erkennung eines Fehlerfalles erreicht wird. Solche kurzzeitigen Schwankungen stammen in der Regel hauptsächlich von der ersten Resonanzfrequenz der Wellenverbindung, sodass sie bei einer Grenzfrequenz unterhalb dieser Resonanzfrequenz effektiv entfernt werden können. Beispielsweise kann die Grenzfrequenz bei einem Zehntel der ersten (niedrigsten) Resonanzfrequenz der Wellenverbindung oder niedriger angesetzt werden.

Dementsprechend ist es vorteilhaft, wenn bei dem vorliegenden Verfahren der Schätzwert mit einem nachgeordneten Tiefpassfilter gefiltert wird, wobei die Grenzfrequenz des nachgeordneten Tiefpassfilters unterhalb der ersten Resonanzfrequenz der Wellenverbindung liegt, und eine Überlastung anhand des gefilterten Schätzwerts erkannt wird.

Darüber hinaus kann die Auswerteeinrichtung einen vorgeordneten Tiefpassfilter umfassen, welcher eingerichtet ist, die zeitliche Änderung des ermittelten Wellendrehmoments, gegebenenfalls vor einer Ermittlung eines Schätzwerts, zu filtern, wobei die Grenzfrequenz des vorgeordneten Tiefpassfilters oberhalb der ersten Resonanzfrequenz der Wellenverbindung liegt. Mit einem solchen vorgeordneten Tiefpassfilter kann das durch die Betrachtung der zeitlichen Änderung bzw. der - z.B. numerisch berechneten - zeitlichen Ableitung verstärkte Messrauschen gefiltert, d.h. aus dem Signal entfernt werden. Die Wahl einer Grenzfrequenz oberhalb der ersten Resonanzfrequenz beruht auf der Erkenntnis, dass vor allem die Schwingungen der ersten Resonanzfrequenz der Wellenverbindung zur Verlustleistung im Dämpfungselement beitragen und das Dämpfungselement erwärmen. Vorzugsweise kann daher die Grenzfrequenz des vorgeordneten Tiefpassfilters oberhalb und in der Nähe der ersten Resonanzfrequenz gewählt werden. Um die höheren Frequenzen zuverlässig zu filtern bzw. zu entfernen, bietet sich hierfür ein Filter höherer Ordnung an, beispielsweise ein Butterworth-Filter 4. oder 6. Ordnung.

Dementsprechend und mit vergleichbaren Vorteilen kann bei dem vorliegenden Verfahren die zeitliche Änderung des ermittelten Wellendrehmoments, gegebenenfalls vor einer Berechnung eines Schätzwerts, mit einem vorgeordneten Tiefpassfilter gefiltert werden, wobei die Grenzfrequenz des vorgeordneten Tiefpassfilters oberhalb der ersten Resonanzfrequenz der Wellenverbindung liegt.

Im Folgenden wird die Erfindung anhand eines besonders bevorzugten Ausführungsbeispiels, auf das sie jedoch nicht beschränkt sein soll, und unter Bezugnahme auf die Zeichnungen noch weiter erläutert. In den Zeichnungen zeigen im Einzelnen:

Fig. 1 grob schematisch einen Motorprüfstand mit einer Wellenverbindung zwischen einer Verbrennungskraftmaschine und einer Belastungsmaschine;

Fig. 2 ein schematisches Blockschaltbild des vorliegenden Verfahrens wie es in der Auswerteeinrichtung gemäß Fig. 1 implementiert ist;

Fig. 3 eine Fig. 4 zugrunde liegende langsame Drehzahlrampe des Prüfstandes gemäß Fig. 1;

Fig. 4 eine Verteilung des ermittelten Wellendrehmoments und einen Verlauf des ermittelten Schätzwerts bei einer Drehzahlrampe gemäß Fig. 3; und

Fig. 5 einen Verlauf des ermittelten Wellendrehmoments und einen Verlauf des ermittelten Schätzwerts bei einem plötzlichen Fehlerfall.

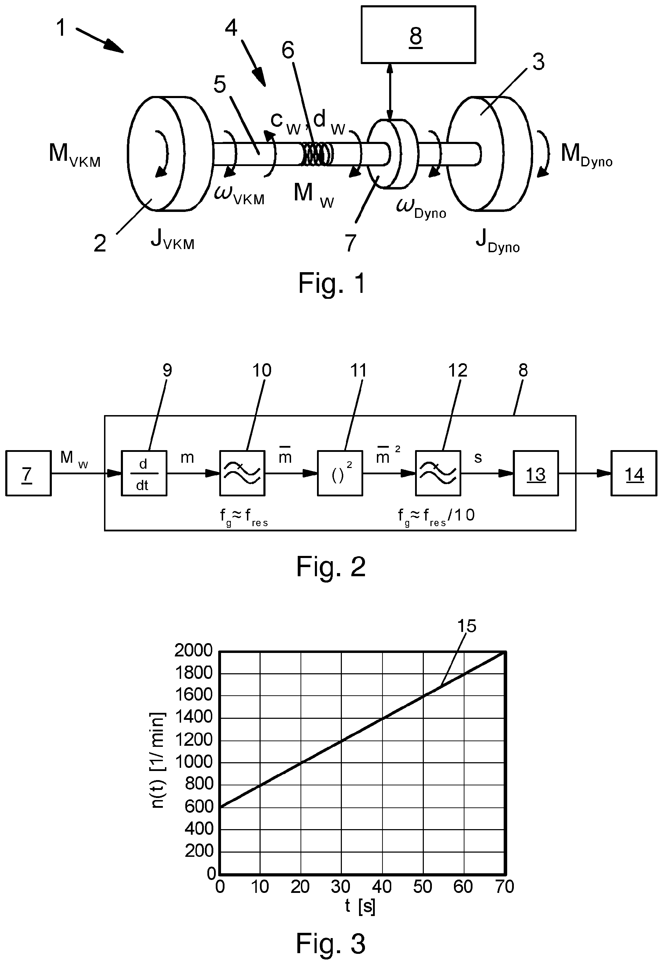

Fig. 1 zeigt einen Motorprüfstands 1 mit einer Verbrennungskraftmaschine (VKM) 2 und einer Belastungsmaschine (Dyno) 3. Die Verbrennungskraftmaschine 2 und die Belastungsmaschine 3 sind durch eine Wellenverbindung 4 in Form einer Welle 5 verbunden. Die Wellenverbindung 4 enthält ein Dämpfungselement 6 aus Gummi, welches in Fig. 1 schematisch als Spiralfeder angedeutet ist. An der Wellenverbindung 4 ist eine Messeinrichtung 7 in Form eines Drehmoment-Messflansches angeordnet. Mit der Messeinrichtung 7 ist eine Auswerteeinrichtung 8 verbunden, welche zur Überwachung der Wellenverbindung 4 auf Überlastungen ein von der Messeinrichtung 7 gemessenes Wellendrehmoment $M_W$ auswertet.

Zum Verständnis der Korrelation zwischen dem zwischen der Verbrennungskraftmaschine 2 und der Belastungsmaschine 3 übertragenen Wellendrehmoment $M_W$ und der deponierten Verlustleistung bzw. der Dämpfungsleistung ist es zweckmäßig, den Zusammenhang zwischen Wellendrehmoment $M_W$ und Drehwinkel $\varphi$ bzw. Winkelgeschwindigkeit $\omega$ an den beiden Enden der Wellenverbindung 4 zu betrachten: Sind die Steifigkeit $c_W$ und Dämpfung $d_W$ der Welle bekannt, kann das über die Wellenverbindung 4 übertragene Drehmoment mit

$$M_W = c_W\left(\varphi_{VKM} - \varphi_{Dyno}\right) + d_W\left(\omega_{VKM} - \omega_{Dyno}\right) \qquad (1)$$

berechnet werden, wobei $\varphi_{VKM}$ und $\omega_{VKM}$ der Drehwinkel und die Winkelgeschwindigkeit der Verbrennungskraftmaschine 2 sind und $\varphi_{Dyno}$ und $\omega_{Dyno}$ der Drehwinkel und die Winkelgeschwindigkeit der Belastungsmaschine 3 sind. Mit Hilfe des Drallsatzes und der Tatsache, dass die Winkelgeschwindigkeit die zeitliche Ableitung des Drehwinkels ist, erhält man

$$J_{VKM}\frac{d\omega_{VKM}}{dt} = M_{VKM} - M_W \qquad \frac{d\varphi_{VKM}}{dt} = \omega_{VKM} \qquad (2)$$

$$J_{Dyno}\frac{d\omega_{Dyno}}{dt} = M_W + M_{Dyno} \qquad \frac{d\varphi_{Dyno}}{dt} = \omega_{Dyno} \qquad (3)$$

mit dem Trägheitsmoment $J_{VKM}$ und dem internen Drehmoment $M_{VKM}$ der Verbrennungskraftmaschine 2 sowie dem Trägheitsmoment $J_{Dyno}$ und dem internen Drehmoment $M_{Dyno}$ der Belastungsmaschine 3. Für das Wellenmoment $M_W$ selbst ist aber nur der Differenzwinkel $\Delta\varphi$ sowie die Differenzwinkelgeschwindigkeit $\Delta\omega$

$$\Delta\varphi = \varphi_{VKM} - \varphi_{Dyno} \qquad \Delta\omega = \omega_{VKM} - \omega_{Dyno} \qquad (4)$$

relevant, wobei aufgrund der Gleichungen (2) und (3)

$$\frac{d\Delta\varphi}{dt} = \Delta\omega \qquad (5)$$

gilt und man für Gleichung (1) die kompakte Formel

$$M_W = c_W \Delta\varphi + d_W \Delta\omega \qquad (6)$$

erhält.

Den momentanen Wert der in die Welle fließenden Leistung $p_W$ erhält man aus dem Produkt von Drehmoment $M_W$ und Differenzwinkelgeschwindigkeit $\Delta\omega$:

$$p_W = M_W \Delta\omega = (c_W \Delta\varphi + d_W \Delta\omega)\Delta\omega = c_W \Delta\varphi\Delta\omega + d_W \Delta\omega^2 \qquad (7)$$

Der 1. Term (d.h. $c_W\Delta\varphi\Delta\omega$) kann hierbei stark positiv und negativ werden, ist aber im eingeschwungenen Zustand im Mittel gleich Null. Für die Erwärmung der Welle ist der 2. Term (d.h. $d_W\Delta\omega^2$) verantwortlich, der die Wellen-verlustleistung $p_V$

$$p_V = d_W \Delta\omega^2 \qquad (8)$$

darstellt und aufgrund des Quadrats der Differenzwinkelgeschwindigkeit immer positiv ist.

Würde man die aktuelle Differenzwinkelgeschwindigkeit $\Delta\omega$ kennen, könnte man damit also die Wellen-Verlustleistung sofort berechnen. Eine direkte Messung wäre jedoch sehr schwierig. Eine Messung der beiden absoluten Winkelgeschwindigkeiten $\omega_{VKM}$ und $\omega_{Dyno}$ wäre aufwendig, meist nicht erwünscht und wäre auch teuer, da sie mit ausreichender Genauigkeit und Dynamik gemessenen werden müssten, damit die Differenz sinnvoll verwendbar wäre.

Geht man vom Wellenmoment nach Gleichung (6) aus und nimmt an, dass der Beitrag aufgrund der Wellensteifigkeit wesentlich größer als jener der Dämpfung ist, erhält man näherungsweise

$$M_W \approx c_W \Delta\varphi \qquad (9)$$

und nach einmaliger Differentiation mit Gleichung (5):

$$\frac{dM_W}{dt} \approx c_W \frac{d\Delta\varphi}{dt} = c_W \Delta\omega \qquad \text{bzw.} \qquad \Delta\omega \approx \frac{1}{c_W}\frac{dM_W}{dt} \qquad (10)$$

Hat man daher das gemessene Wellendrehmoment $M_W$ zur Verfügung, kann man die Wellenverlustleistung mit

$$p_V \approx \frac{d_W}{c_W^2}\left(\frac{dM_W}{dt}\right)^2 \qquad (11)$$

recht einfach und genau schätzen. Aus Sicht der Praxis gibt es jedoch noch ein paar Nachteile:

1. Durch die zeitliche Ableitung des ermittelten Wellendrehmoments $M_W$ wird das immer vorhandene Messrauschen verstärkt, und zwar insbesondere bei höheren Frequenzen.
2. Die Wellenparameter Steifigkeit $c_W$ und Dämpfung $d_W$ sind eventuell nicht bekannt.
3. Der ermittelte Schätzwert der Wellenverlustleistung $p_V$ kann möglicherweise noch stark schwanken, wodurch eine sichere Erkennung eines Fehlerfalls schwierig sein könnte.

Die in Fig. 2 dargestellte Verarbeitung des von der Messeinrichtung 7 ermittelten Wellendrehmoments $M_W$ in der Auswerteeinrichtung 8 und gemäß dem vorliegenden Verfahren kann diese Nachteile beseitigen oder zumindest auf ein akzeptables Maß reduzieren. Dabei wird das von der Messeinrichtung 7 ermittelte Wellendrehmoment $M_W$ zunächst einer numerischen zeitlichen Ableitung 9 zugeführt.

Als Abhilfe für den ersten Punkt oben wird ein vorgeordneter Tiefpassfilter 10 vor der Quadrierung 11 und nach der numerischen zeitlichen Ableitung 9 des Wellendrehmoments $M_W$ eingesetzt. Für die Wahl der Grenzfrequenz $f_{gv}$ des vorgeordneten Tiefpassfilters 10 kann man davon ausgehen, dass vor allem Schwingungen der ersten Resonanzfrequenz $f_{res}$ der Wellenverbindung 4 die Welle 5 erwärmen. Es kann daher vorteilhafter Weise die Grenzfrequenz $f_{gv}$ des vorgeordneten Tiefpassfilters 10 in der Nähe dieser ersten Resonanzfrequenz $f_{res}$ und leicht darüber gewählt werden:

$$ f_{gv} \approx f_{res} = \frac{1}{2\pi} \sqrt{c_W \left( \frac{1}{J_{VKM}} + \frac{1}{J_{Dyno}} \right)} \qquad (12) $$

Um die höheren Frequenzen zuverlässig zu filtern, bietet sich ein Filter höherer Ordnung an, beispielsweise ein Butterworth-Filter 4. oder 6. Ordnung.

Für den zweiten Punkt muss man bedenken, dass nur zwischen Normalbetrieb und Fehlerfall sauber unterschieden werden muss. Die Kenntnis der genauen wahren Wellenverlustleistung $p_v$ im Normalbetrieb ist hingegen weniger wichtig. Es kann daher ein beliebig skalierter Wert verwendet werden. Im einfachsten Fall wählt man daher den zur Wellenverlustleistung $p_v$ proportionalen Schätzwert s:

$$ s = \left( \frac{dM_W}{dt} \right)^2 \sim p_v \qquad (13) $$

Als Abhilfe für den dritten Punkt bietet sich ein nachgeordneter Tiefpassfilter 12 nach der Quadrierung 11 und vor einer Auswertung 13 des Schätzwerts s eingesetzt. Damit die - hauptsächlich von der ersten Resonanzfrequenz stammenden - Schwankungen gut gefiltert werden, kann die Grenzfrequenz $f_{gn}$ des nachgeordneten Tiefpassfilters 12 deutlich niedriger als die erste Resonanzfrequenz $f_{res}$ gewählt werden, zum Beispiel:

$$ f_{gn} \approx \frac{f_{res}}{10} \qquad (14) $$

Zusammenfassend wird somit bei dem vorliegenden Verfahren, wie in Fig. 2 dargestellt, ausgehend von einem wiederholt ermittelten oder gemessenen bzw. überwachten Wellendrehmoment $M_W$ der Wellenverbindung 4 eine zeitliche Ableitung m des Wellendrehmoments $M_W$ numerisch berechnet, die berechnete zeitliche Ableitung m einer Tiefpassfilterung im vorgeordneten Tiefpassfilter 10 mit einer Grenzfrequenz $f_{gv}$ in der Nähe und knapp oberhalb der Resonanzfrequenz $f_{res}$ der Wellenverbindung 4 unterzogen, in der Quadrierung 11 das Quadrat $\overline{m}^2$ der gefilterten zeitlichen Ableitung $\overline{m}$ berechnet und das Quadrat anschließend einer Tiefpassfilterung im nachgeordneten Tiefpassfilter 12 mit der Grenzfrequenz $f_{gn}$ deutlich unterhalb, z.B. bei einem Zehntel, der Resonanzfrequenz $f_{res}$ der Wellenverbindung 4 unterzogen. Das Ergebnis der so gefilterten quadrierten zeitlichen Ableitung des gemessenen Wellendrehmoments $M_W$ bildet den Schätzwert s zur Erkennung von Überlastungen der Wellenverbindung 4 bzw. des Dämpfungselements 6 in der Auswertung 13. Wenn die Auswertung 13 einen Fehlerfall erkennt, wird ein entsprechendes Fehlersignal oder eine entsprechende Fehlernachricht an die Anzeigeeinrichtung 14, z.B. eine Warnleuchte, ein Display, ein Lautsprecher, etc., übermittelt.

Die Schätzung basiert demzufolge auf einer direkten Messung oder indirekten Ermittlung des Wellendrehmoments $M_W$. Bei einem Motorprüfstand 1 gemäß Fig. 1 wird diese Größe üblicherweise bereits aus anderen Gründen mit einem Drehmoment-Messflansch gemessen. Bei anderen Anwendungen, z.B. bei Antriebswellen von Fahrzeugen oder Schiffen, kann ein zusätzlicher Sensor vorgesehen werden, wobei die Anforderungen an den Sensor vergleichsweise leicht zu erfüllen sind: Da der Schätzwert s nur proportional zur Wellenverlustleistung $p_V$ ist, sind auch relativ große Messfehler des Drehmoment-Messwerts $M_W$ akzeptabel und bezüglich der Dynamik muss im Wesentlichen nur die erste Resonanzfrequenz $f_{res}$ der Wellenverbindung 4 gut erfasst werden.

Um die Vorteile der vorliegenden Vorrichtung und des vorliegenden Verfahrens noch weiter zu illustrieren, wurde eine Simulationsstudie zur Erkennung von Überlastungen einer Wellenverbindung 4 wie oben erläutert (vgl. Fig.

1) durchgeführt. Dabei wurde beispielhaft ein Motorprüfstand 1 mit einer ersten Resonanzfrequenz $f_{res}$ bei 16 Hz und einer Sechszylinder-Verbrennungskraftmaschine als Verbrennungskraftmaschine 2 simuliert. In Fig. 3 ist der simulierte Verlauf der Drehzahl n(t) gemäß einer langsamen linearen Drehzahlrampe 11 über den Betriebsbereich der Verbrennungskraftmaschine 2 von 600 bis 2000 Umdrehungen pro Minute über eine Zeitspanne von 70 Sekunden gezeigt.

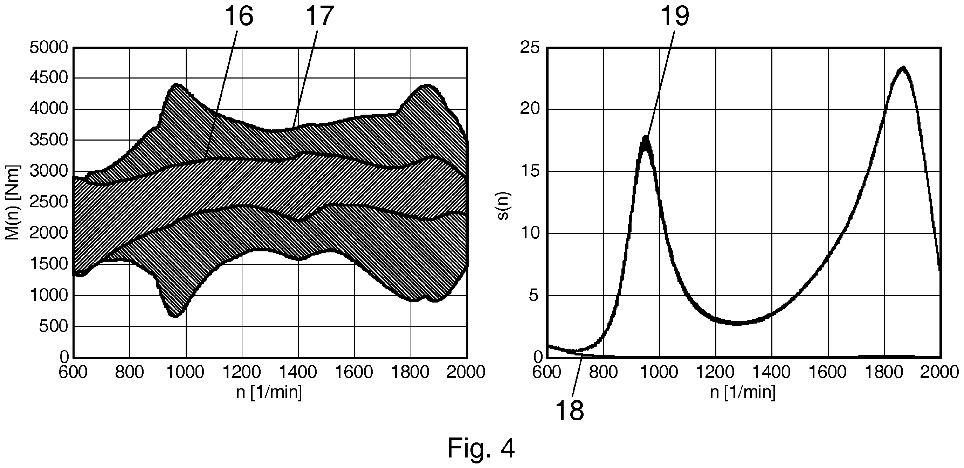

Auf Basis dieser Drehzahlrampe 15 (vgl. Fig. 3) zeigt Fig. 4 auf der linken Seite die Verteilung bzw. Schwankungsbreite des ungefilterten Wellendrehmoments $M_W$ der Wellenverbindung 4 in Newtonmeter (Nm) für den Normalbetrieb 16 (zentraler, schmaler, von links unten nach rechts oben schraffierter Bereich) und im Fehlerfall 17 (breiterer, von links oben nach rechts unten schraffierter Bereich), d.h. bei Fehlzündung eines Zylinders. Dabei ist das Wellendrehmoment $M_W$ als Funktion der Drehzahl n gemäß der in Fig. 3 dargestellten Rampe 15 aufgetragen. Rechts davon zeigt Fig. 4 den Verlauf des Schätzwerts s im Normalbetrieb 18 und im Fehlerfall 19, ebenfalls als Funktion der Drehzahl n gemäß der in Fig. 3 dargestellten Rampe 15. Dabei wurde der Schätzwert s auf das Maximum des Schätzwerts s im Normalbetrieb 18 normiert, sodass im Normalbetrieb der größte Wert Eins ist. Verwendet man als Grenzwert beispielsweise das Doppelte des im Normalbetrieb auftretenden maximalen Werts, kann der Fehlerfall zuverlässig und frühzeitig erkannt und eine Zerstörung der Wellenverbindung 4 verhindert werden.

Im dargestellten Fall würde dieser Grenzwert etwa bei einer Drehzahl von 800 Umdrehungen pro Minute, d.h. etwa 10 Sekunden nach Start der Drehzahlrampe 15, erreicht werden, sodass eine bevorstehende Überlastung zwischen 900 und 1000 Umdrehungen pro Minute rechtzeitig erkannt und zumindest die Drehzahlrampe 15 gestoppt werden könnte.

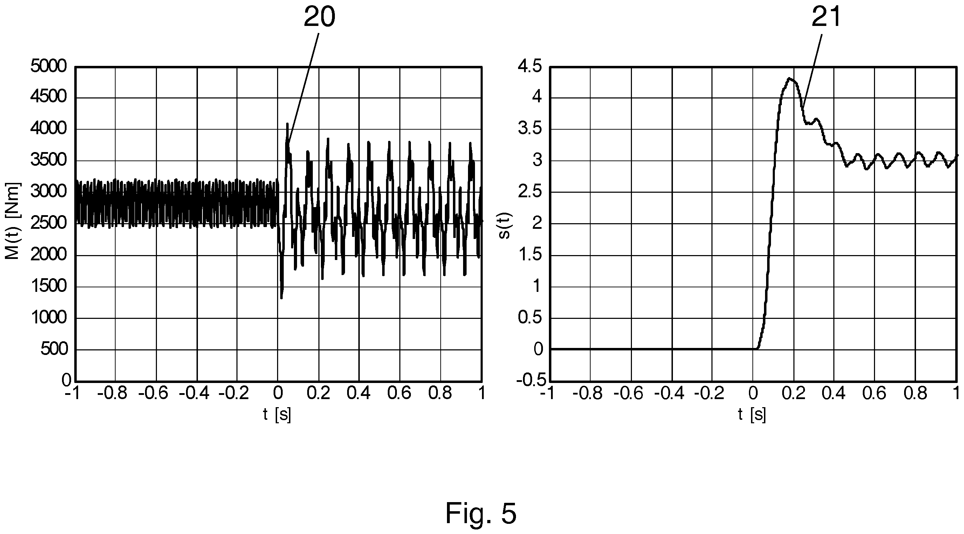

In Fig. 5 ist im Diagramm auf der linken Seite der Verlauf 20 des ungefilterten Wellendrehmoment $M_W$ der Wellenverbindung 4 (vgl. Fig. 1) in Newtonmeter (Nm) über einer Zeitachse von -1 bis 1 Sekunde und mit einem plötzlich auftretenden Fehlerfall zum Zeitpunkt t = 0 dargestellt. Das Diagramm auf der rechten Seite von Fig. 5 zeigt den korrespondierenden Verlauf 21 des Schätzwerts s mit gleicher Normierung wie in Fig. 4 (d.h. Normierung auf das Maximum des im Normalbetrieb erwarteten Schätzwerts s über den gesamten Drehzahlbereich der Maschine) und für die gleiche Zeitachse wie im Diagramm auf der linken Seite von Fig. 5. Wenn auch in diesem Fall wieder ein Grenzwert für den Schätzwert s beim Doppelten des im Normalbetrieb auftretenden Werts verwendet wird (d.h. bei der gegebenen Normierung ein Grenzwert von 2), kann der plötzlich auftretende Fehlerfall innerhalb von 0.1 Sekunden zuverlässig erkannt werden. Mit nach einer solchen kurzen Zeit ergriffenen geeigneten Gegenmaßnahmen (z.B. Abstellen des Prüfstands) kann eine Zerstörung der Wellenverbindung 4 bzw. des Dämpfungselements 6 in der Regel verhindert werden.

## Patentansprüche

1. Vorrichtung zur Überwachung einer Wellenverbindung (4) mit einem Dämpfungselement (6) zur Dämpfung von torsionalen Schwingungen der Wellenverbindung (4), die Vorrichtung umfassend eine Messeinrichtung (7) zur Ermittlung eines über die Wellenverbindung (4) übertragenen Wellendrehmoments ($M_W$), wobei mit der Messeinrichtung (7) eine Auswerteeinrichtung (8) verbunden ist, welche eingerichtet ist, eine zeitliche Ableitung eines von der Messeinrichtung (7) ermittelten Wellendrehmoments ($M_W$) zu berechnen, **dadurch gekennzeichnet, dass** die Auswerteeinrichtung eingerichtet ist, auf Basis der berechneten zeitlichen Ableitung eine Überlastung des Dämpfungselements (6) zu erkennen.

2. Vorrichtung nach Anspruch 1, **dadurch gekennzeichnet, dass** die Auswerteeinrichtung (8) eingerichtet ist, eine Überlastung des Dämpfungselements (6) anhand eines der im Dämpfungselement (6) umgesetzten Verlustleistung ($p_V$) proportionalen Schätzwerts (s) zu erkennen, wobei der Schätzwert (s) dem Quadrat der zeitlichen Ableitung des ermittelten Wellendrehmoments ($M_W$) entspricht.

3. Vorrichtung nach Anspruch 2, **dadurch gekennzeichnet, dass** die Auswerteeinrichtung (8) eingerichtet ist, eine Überlastung zu erkennen, wenn der Schätzwert (s) einen festgelegten Grenzwert überschreitet.

4. Vorrichtung nach einem der Ansprüche 2 oder 3, **dadurch gekennzeichnet, dass** die Auswerteeinrichtung (8) einen nachgeordneten Tiefpassfilter (12) umfasst, welcher eingerichtet ist, den Schätzwert zu filtern, wobei die Grenzfrequenz ($f_{gn}$) des nachgeordneten Tiefpassfilters (12) unterhalb der ersten Resonanzfrequenz ($f_{res}$) der Wellenverbindung (4) liegt, und wobei die Auswerteeinrichtung (8) eingerichtet ist, eine Überlastung anhand des gefilterten Schätzwerts (s) zu erkennen.

5. Vorrichtung nach einem der Ansprüche 1 bis 4, **dadurch gekennzeichnet, dass** die Auswerteeinrichtung (8) einen vorgeordneten Tiefpassfilter (10) umfasst, welcher eingerichtet ist, die zeitliche Änderung des ermittelten Wellendrehmoments ($M_W$), gegebenenfalls vor einer Ermittlung eines Schätzwerts (s), zu filtern, wobei die Grenzfrequenz ($f_{gv}$) des vorgeordneten Tiefpassfilters (10) oberhalb der ersten Resonanzfrequenz ($f_{res}$) der Wellenverbindung (4)

liegt.

6. Verfahren zur Überwachung einer Wellenverbindung (4) mit einem Dämpfungselement (6) zur Dämpfung von torsionalen Schwingungen der Wellenverbindung (4), wobei ein über die Wellenverbindung (4) übertragenes Wellendrehmoment ($M_W$) ermittelt wird, wobei eine zeitliche Ableitung des ermittelten Wellendrehmoments ($M_W$) berechnet wird, **dadurch gekennzeichnet dass** auf Basis der berechneten zeitlichen Ableitung eine Überlastung des Dämpfungselements (6) erkannt wird.

7. Verfahren nach Anspruch 6, **dadurch gekennzeichnet, dass** aus der zeitlichen Ableitung des ermittelten Wellendrehmoments ($M_W$) durch Quadrierung ein der im Dämpfungselement (6) umgesetzten Verlustleistung ($p_V$) proportionaler Schätzwert (s) berechnet wird und eine Überlastung des Dämpfungselements (6) anhand des so berechneten Schätzwerts (s) erkannt wird.

8. Verfahren nach Anspruch 7, **dadurch gekennzeichnet, dass** eine Überlastung erkannt wird, wenn der Schätzwert (s) einen festgelegten Grenzwert überschreitet.

9. Verfahren nach einem der Ansprüche 7 oder 8, dass der Schätzwert mit einem nachgeordneten Tiefpassfilter (12) gefiltert wird, wobei die Grenzfrequenz ($f_{gn}$) des nachgeordneten Tiefpassfilters (12) unterhalb der ersten Resonanzfrequenz ($f_{res}$) der Wellenverbindung (4) liegt, und eine Überlastung anhand des gefilterten Schätzwerts (s) erkannt wird.

10. Verfahren nach einem der Ansprüche 6 bis 9, **dadurch gekennzeichnet, dass** die zeitliche Änderung des ermittelten Wellendrehmoments ($M_W$), gegebenenfalls vor einer Berechnung eines Schätzwerts (s), mit einem vorgeordneten Tiefpassfilter (10) gefiltert wird, wobei die Grenzfrequenz ($f_{gv}$) des vorgeordneten Tiefpassfilters (10) oberhalb der ersten Resonanzfrequenz ($f_{res}$) der Wellenverbindung (4) liegt.

**Claims**

1. Apparatus for monitoring a shaft connection (4) comprising a damping element (6) for damping torsional oscillations of the shaft connection (4), the apparatus comprising a measuring device (7) for determining a shaft torque ($M_W$) transmitted over the shaft connection (4), an evaluating device (8) being connected to the measuring device (7), which evaluating device is configured to calculate a time derivative of a shaft torque ($M_W$) determined by the measuring device (7), **characterised in that** the evaluating device is configured to detect overloading of the damping element (6) on the basis of the calculated time derivative.

2. Apparatus according to claim 1, **characterised in that** the evaluating device (8) is configured to detect overloading of the damping element (6) on the basis of an estimated value (s) that is proportional to the power loss ($p_v$) converted in the damping element (6), the estimated value (s) corresponding to the square of the time derivative of the determined shaft torque ($M_W$).

3. Apparatus according to claim 2, **characterised in that** the evaluating device (8) is configured to detect overloading when the estimated value (s) exceeds a set threshold value.

4. Apparatus according to either claim 2 or claim 3, **characterised in that** the evaluating device (8) comprises a downstream low-pass filter (12), which is configured to filter the estimated value, the threshold frequency ($f_{gn}$) of the downstream low-pass filter (12) being below the first resonance frequency ($f_{res}$) of the shaft connection (4), and the evaluating device (8) being configured to detect overloading on the basis of the filtered estimated value (s).

5. Apparatus according to any of claims 1 to 4, **characterised in that** the evaluating device (8) comprises an upstream low-pass filter (10), which is configured to filter the change over time of the determined shaft torque ($M_W$), optionally before an estimated value (s) is determined, the threshold frequency ($f_{gv}$) of the upstream low-pass filter (10) being higher than the first resonance frequency ($f_{res}$) of the shaft connection (4).

6. Method for monitoring a shaft connection (4) comprising a damping element (6) for damping torsional oscillations of the shaft connection (4), a shaft torque ($M_W$) transmitted over the shaft connection (4) being determined, a time derivative of the determined shaft torque ($M_W$) being calculated, **characterised in that** overloading of the damping element (6) is detected on the basis of the calculated time derivative.

EP 3 283 786 B1

7. Method according to claim 6, **characterised in that** an estimated value (s) that is proportional to the power loss ($p_V$) converted in the damping element (6) is calculated by squaring the time derivative of the determined shaft torque ($M_W$) and overloading of the damping element (6) is detected on the basis of the estimated value (s) calculated in this way.

8. Method according to claim 7, **characterised in that** overloading is detected when the estimated value (s) exceeds a set threshold value.

9. Method according to either claim 7 or claim 8, **characterised in that** the estimated value is filtered by a downstream low-pass filter (12), the threshold frequency ($f_{gn}$) of the downstream low-pass filter (12) being below the first resonance frequency ($f_{res}$) of the shaft connection (4), and overloading being detected on the basis of the filtered estimated value (s).

10. Method according to any of claims 6 to 9, **characterised in that** the change over time of the determined wave torque ($M_W$) is filtered by an upstream low-pass filter (10), optionally before an estimated value (s) is calculated, the threshold frequency ($f_{gv}$) of the upstream low-pass filter (10) being higher than the first resonance frequency ($f_{res}$) of the shaft connection (4).

**Revendications**

1. Dispositif servant à surveiller un raccordement d'arbre (4) avec un élément d'amortissement (6) servant à amortir des vibrations torsionnelles du raccordement d'arbre (4), le dispositif comprenant un système de mesure (7) servant à déterminer un couple de rotation d'arbre ($M_W$) transmis par l'intermédiaire du raccordement d'arbre (4), dans lequel est raccordé au système de mesure (7) un système d'analyse (8), qui est mis au point pour calculer une dérivée temporelle d'un couple de rotation d'arbre ($M_W$) déterminé par le système de mesure (7), **caractérisé en ce que** le système d'analyse est mis au point pour identifier une surcharge de l'élément d'amortissement (6), sur la base de la dérivée temporelle calculée.

2. Dispositif selon la revendication 1, **caractérisé en ce que** le système d'analyse (8) est mis au point pour identifier une surcharge de l'élément d'amortissement (6) à l'aide d'une l'estimation (s) proportionnelle à la puissance dissipée ($p_V$) mise en oeuvre dans l'élément d'amortissement (6), dans lequel l'estimation (s) correspond au carré de la dérivée temporelle du couple de rotation d'arbre ($M_W$) déterminé.

3. Dispositif selon la revendication 2, **caractérisé en ce que** le système d'analyse (8) est mis au point pour identifier une surcharge quand l'estimation (s) dépasse une valeur limite fixée.

4. Dispositif selon l'une quelconque des revendications 2 ou 3, **caractérisé en ce que** le système d'analyse (8) comprend un filtre passe-bas (12) disposé en aval, qui est mis point pour filtrer l'estimation, dans lequel la fréquence limite ($f_{gn}$) du filtre passe-bas (12) disposé en aval est inférieure à la première fréquence de résonance ($f_{res}$) du raccordement d'arbre (4), et dans lequel le système d'analyse (8) est mis au point pour identifier une surcharge à l'aide de l'estimation (s) filtrée.

5. Dispositif selon l'une quelconque des revendications 1 à 4, **caractérisé en ce que** le système d'analyse (8) comprend un filtre passe-bas (10) disposé en amont, qui est mis au point pour filtrer la variation dans le temps du couple de rotation d'arbre ($M_W$) déterminé, éventuellement avec une détermination d'une estimation (s), dans lequel la fréquence limite ($f_{gv}$) du filtre passe-bas (10) disposé en amont est supérieure à la première fréquence de résonance ($f_{res}$) du raccordement d'arbre (4).

6. Procédé servant à surveiller un raccordement d'arbre (4) avec un élément d'amortissement (6) servant à amortir des vibrations torsionnelles du raccordement d'arbre (4), dans lequel un couple de rotation d'arbre ($M_W$) transmis par l'intermédiaire du raccordement d'arbre (4) est déterminé, dans lequel une dérivée temporelle du couple de rotation d'arbre ($M_W$) déterminé est calculée, **caractérisé en ce qu'**une surcharge de l'élément d'amortissement (6) est identifiée sur la base de la dérivée temporelle calculée.

7. Procédé selon la revendication 6, **caractérisé en ce qu'**une estimation (s) proportionnelle à la puissance dissipée ($p_V$) mise en oeuvre dans l'élément d'amortissement (6) est calculée à partir de la dérivée temporelle du couple de rotation d'arbre ($M_W$) déterminé par élévation au carré et une surcharge de l'élément d'amortissement (6) est identifiée à l'aide de l'estimation (s) ainsi calculée.

8. Procédé selon la revendication 7, **caractérisé en ce qu'**une surcharge est identifiée quand l'estimation (s) dépasse une valeur limite fixée.

9. Procédé selon l'une quelconque des revendications 7 ou 8, **caractérisé en ce que** l'estimation est filtrée avec un filtre passe-bas (12) disposé en aval, dans lequel la fréquence limite ($f_{gn}$) du filtre passe-bas (12) disposé en aval est inférieure à la première fréquence de résonance ($f_{res}$) du raccordement d'arbre (4), et une surcharge est identifiée à l'aide de l'estimation (s) filtrée.

10. Procédé selon l'une quelconque des revendications 6 à 9, **caractérisé en ce que** la variation dans le temps du couple de rotation d'arbre ($M_W$) déterminé est filtrée, éventuellement avant un calcul d'une estimation (s), avec un filtre passe-bas (10) disposé en amont, dans lequel la fréquence limite ($f_{gv}$) du filtre passe-bas (10) disposé en amont est supérieure à la première fréquence de résonance ($f_{res}$) du raccordement d'arbre (4).

Fig. 1

Fig. 2

Fig. 3

Fig. 4

Fig. 5

EP 3 283 786 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2143973 A1
- US 4592241 A
- EP 0478529 A2
- EP 2820392 A1
- EP 1333268 A2